# EUROPÄISCHE PATENTSCHRIFT

(11) **EP 4 045 772 B1**
(45) Veröffentlichungstag und Bekanntmachung des Hinweises auf die Patenterteilung: **01.01.2025**
(21) Anmeldenummer: 20804442.0
(22) Anmeldetag: 22.10.2020
(51) Int. Cl.: F01K 23/10, F22B 37/00, F22B 37/56

(54) **KESSELSPÜLEN**
BOILER FLUSHING
NETTOYAGE DE CHAUDIÈRE

(30) Priorität: 13.12.2019 DE 102019219613
(43) Veröffentlichungstag der Anmeldung: 24.08.2022
(73) Patentinhaber: Siemens Energy Global GmbH & Co. KG, 81739 München (DE)
(72) Erfinder: KEUNE, Christian, 42579 Heiligenhaus (DE); BOCK, Detlef, 91052 Erlangen (DE)
(86) Internationale Anmeldenummer: PCT/EP2020/079678
(87) Internationale Veröffentlichungsnummer: WO 2021/115671

(56) Entgegenhaltungen:
- EP-A2- 1 219 801
- CH-A1- 704 715
- DE-A1- 10 117 101
- DE-A1- 19 744 917
- US-A1- 2018 058 337
- US-A1- 2018 058 338

## Beschreibung

Die Erfindung betrifft ein Verfahren zum Spülen eines Abhitzedampferzeugers einer Kraftwerksanlage.

Stationäre Gasturbinen und Verfahren zum Betrieb der Gasturbinen sind aus dem verfügbaren Stand der Technik in umfangreicher Art und Weise bekannt. Gasturbinen moderner Bauart, welche zur Erzeugung elektrischer Energie eingesetzt werden, weisen in der Regel einen axial durchströmbaren Verdichter, eine oder mehrere Brennkammern und eine Turbineneinheit auf. Im Betrieb wird ein der Brennkammer zugeführter Brennstoff mit Hilfe der vom Verdichter verdichteten Umgebungsluft zu einem Heißgas verbrannt, welches sich in der Turbineneinheit an dem Rotor der Gasturbine arbeitsleistend entspannt. Der Rotor treibt dann einen Generator an, welcher die mechanische Energie in elektrische Energie verlustarm umwandelt und in ein Stromverteilungsnetz einspeist.

Bekanntermaßen spielen kurze Startzeiten der Gasturbine, insbesondere bei Kraftwerksanlagen zur Abdeckung von Lastspitzen, auf dem Gasturbinenmarkt eine immer größere Rolle, da für die Kraftwerksbetreiber kurze Startzeiten finanziell relevant sind (Verfügbarkeit). Ein Beispiel für ein Verfahren zum schnellen Gasturbinenanlagenstart offenbart die EP 2 644 839 A1, wonach bei dem Start der Gasturbine der Generator vor Erreichen der Betriebsdrehzahl der Gasturbine über den Frequenzumformer an das elektrische Netz angeschlossen wird, wobei der Frequenzumformer so angesteuert wird, dass er einen Ausgangsstrom mit der Netzfrequenz erzeugt.

Um die heißen Abgase der Gasturbine zu nutzen, ist in einer Gas- und Dampfturbinenanlage der Gasturbine abgasseitig ein Abhitzedampferzeuger (Kessel) nachgeschaltet, dessen Heizflächen in den Wasser-Dampf-Kreislauf einer Dampfturbine geschaltet sind.

Für derartige Anlagen ist es typischerweise erforderlich, vor dem Zünden der Gasturbine ein sogenanntes Kesselspülen durchzuführen, bei dem die Gasturbine auf eine sogenannte Spüldrehzahl gebracht und mit Frischluft gespült wird, bis sichergestellt ist, dass alle explosiven Brennstoffgemische aus dem Abhitzedampferzeuger gespült sind. Der Vorgang des Kesselspülens wird auch als Belüftung bzw. Vorbelüftung bezeichnet, der Begriff des Spülens (englisch: purge) ist für den Vorgang aber treffender. Hierzu gibt es explizite Vorgaben und Regelwerke. Insbesondere nachdem ein Trip (ungeplante oder Notabschaltung) ausgelöst wurde, müssen vor dem nächsten Gasturbinenstart Abgastrakt und Abhitzedampferzeuger gespült werden. Die DE 199 59 342 A1 offenbart in diesem Zusammenhang ein Kombikraftwerk und führt aus, dass es üblich und aus sicherheitstechnischen Gründen vorgeschrieben sei, nach einer Betriebsunterbrechung den Abhitzedampferzeuger vor einem erneuten Anfahren der Anlage mit Luft zu spülen. Eine derartige Kesselspülung dauert incl. Beschleunigung und Auslaufen je nach Kesselvolumen ca. 15 Minuten. Wie bei den reinen Gasturbinenanlagen sind kurze Startzeiten auch bei Gas- und Dampfturbinenanlagen finanziell relevant. Dokument US2018/058337 A1 offenbart ein Verfahren zur Verbesserung der Abschaltspülströmung in einem Gasturbinensystem.

Ein weiterer Aspekt der Erfindung ist darin zu sehen, dass nach einer Gasturbinenabfahrt von Last bei Nenndrehzahl, die Abgastemperatur mit einem sehr hohen Gradienten sinkt. Falls es sich hierbei um einen Trip handelt, muss vor dem nächsten Gasturbinenstart zwingend ein Kesselspülen stattfinden. Bei einem Heißstart erhöht dies die Spannungen in den Gasturbinen und an den dickwandigen Bauteilen des Abhitzedampferzeugers, weil zum Spülen vergleichsweise kalte Umgebungsluft angesaugt und sowohl durch die Gasturbine als auch den Abhitzedampferzeuger geblasen wird. Außerdem kühlt das Gasturbinengehäuse schneller ab als der Rotor. Dies führt zu kleineren Spalten an der Gasturbine, die in einer Spielüberbrückung (Rubs) resultieren können. Mittelfristig gesehen verschlechtert die Gasturbine dadurch die Dichteigenschaften durch Spaltvergrö-βerung und ein Wirkungsgradverlust ist vorauszusehen. Dieses Problem ließe sich durch Erhöhung der Kaltspalte bei der Gasturbine lösen, führt aber zu schlechteren Wirkungsgraden. Außerdem müsste der Abhitzedampferzeuger teurer (höherwertige Materialien) ausgelegt werden.

Aufgabe der Erfindung ist es, ein Verfahren zum Spülen eines Abhitzedampferzeugers einer Kraftwerksanlage anzugeben.

Die Erfindung löst diese Aufgabe, indem sie vorsieht, dass bei einem derartigen Verfahren zum Spülen eines Abhitzedampferzeugers einer Kraftwerksanlage mit einer Gasturbine, umfassend einen Rotor, und mit einem an die Gasturbine gekoppelten Generator und einem Anfahrumrichter zum Umwandeln von einem Wechselstrom beliebiger Frequenz in einen Wechselstrom vorgegebener Frequenz, wobei der Anfahrumrichter mit einem Ausgang des Generators verbunden ist, an dem der Wechselstrom beliebiger Frequenz anliegt, beim Abfahren der Gasturbine der Rotor mit Hilfe des Anfahrumrichters bei einer Kesselspüldrehzahl abgefangen wird und der Abhitzedampferzeuger so lange weitergespült wird, bis Vorgaben zum Spülen des Abhitzedampferzeugers erfüllt sind. Als Kesselspüldrehzahl ist die Drehzahl zu verstehen, mit der die Gasturbine im Spülbetrieb betrieben wird, d.h. die Drehzahl ist ausreichend hoch, dass ein durch Normen geforderter Volumenaustausch im Abhitzedampferzeuger erfolgt, damit möglicherweise vorhandene Reste von unverbranntem Brennstoff sicher entfernt und so beispielsweise eine unerwünschte Selbstentzündung vermieden werden. Anders ausgedrückt bedeutet dies für den Rotor, dass er beispielsweise ausgehend von einer Nenndrehzahl sich beim Abfahren der Gasturbine immer langsamer dreht, jedoch ohne die Kesselspüldrehzahl für eine vorgegebene Dauer zu unterschreiten. Anstelle des klassischen Kesselspülens nach einem Trip und vor dem Wiederstart, ist es möglich, das Spülvolumen beim Abfahren der Gasturbine (von Nenndrehzahl ausgehend) unter folgenden Voraussetzungen zu nutzen:
- Das Brennstoffsystem umfasst aufgrund der einschlägigen sicherheitstechnischen Vorschriften üblicherweise ein Gasschloss. Ein Gasschloss umfasst zwei Armaturen, beispielsweise Kugelhähne, die für einen Gasdurchfluss zu öffnen oder zu schließen sind. Zwischen diesen beiden Armaturen ist eine Zwischenentlastung oder eine Druckleitung angeschlossen. Dieses Gasschloss ist geschlossen (passiert nach wenigen Sekunden).
- Die Gasturbine fährt oberhalb der Kesselspüldrehzahl.
- Lufteinlass- und Kaminklappe sind geöffnet.

Vorzugsweise wird ab Erreichen einer Kesselspüldrehzahl der Gasturbine eine Gasturbinendrehzahl wiederholt auf- und abgefahren, jedoch ohne die Kesselspüldrehzahl zu unterschreiten. Dies vermeidet ein längeres Verweilen der Gasturbine in Bereichen kritischer Frequenzen (Eigenfrequenzen).

Bevorzugt wird die Gasturbinendrehzahl mindestens solange wiederholt auf- und abgefahren, bis eine Mindestdauer für einen Spülvorgang erreicht ist. Dabei ist es zweckmäßig, entsprechende (internationale) Normen einzuhalten, wie beispielsweise die Mindestdauer für den Spülvorgang, die typischerweise 5 Minuten beträgt, da ein bestimmter Volumenaustausch im Kessel zum erfolgreichen Abschluss des Spülens notwendig ist (in der Norm NFPA85 gibt es beispielsweise die Anforderung "mindestens 5 Minuten"). Um dies sicherzustellen, kann beim Abfahren der Gasturbine der Rotor mit Hilfe des Anfahrumrichters bei der Kesselspüldrehzahl abgefangen und so lange weitergespült werden, bis die o.g. Anforderungen erfüllt sind.

Es ist zweckmäßig, die Gasturbinendrehzahl oberhalb der Kesselspüldrehzahl zu halten, denn auch sie ist für den Spülvorgang genormt und beträgt typischerweise 8% der Nenndrehzahl.

Mit der Erfindung wird bereits die Abfahrt der Gasturbine als Kesselspülung genutzt. Ferner wird der Anfahrumrichter beim Auslaufen der Gasturbine genutzt, um das Kesselspülen so zu gestalten, dass alle Normanforderungen in möglichst kurzer Zeit erfüllt werden. Außerdem wird bei dem erfindungsgemäßen Verfahren ein Spülen von noch heißen Bauteilen von Gasturbine und Abhitzedampferzeuger mit vergleichsweise kalter Umgebungsluft vermieden.

Dieses Verfahren verbessert die Startverfügbarkeit, verlängert die Bauteillebensdauer und verschafft der Kraftwerksanlage einen Performance-Vorteil durch kleinere Designspalte bzw. weniger "Anstreif"-Vorfälle in der Gasturbine.

Die Erfindung wird beispielhaft anhand der Figuren näher erläutert. Es zeigen schematisch und nicht maßstäblich:
Figur 1: eine an ein elektrisches Versorgungsnetz angeschlossene Gasturbine und
Figur 2: die Gasturbinendrehzahl beim Abfahrvorgang nach der Erfindung.

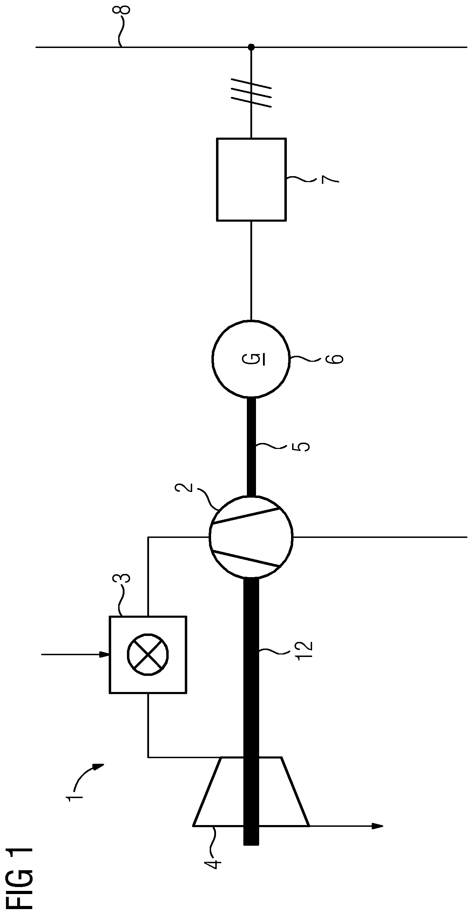

Die Figur 1 zeigt eine Gasturbine 1 mit Verdichter 2, Brennkammer 3 und Turbine 4 mit Rotor 12. Im Ausführungsbeispiel der Figur 1 sind Verdichter 2 und Turbine 4 auf einer gemeinsamen Welle 5 angeordnet. Ebenfalls auf der Welle 5 angeordnet ist ein Generator 6, der über einen Anfahrumrichter 7 mit einem Energieversorgungsnetz 8 verbunden ist.

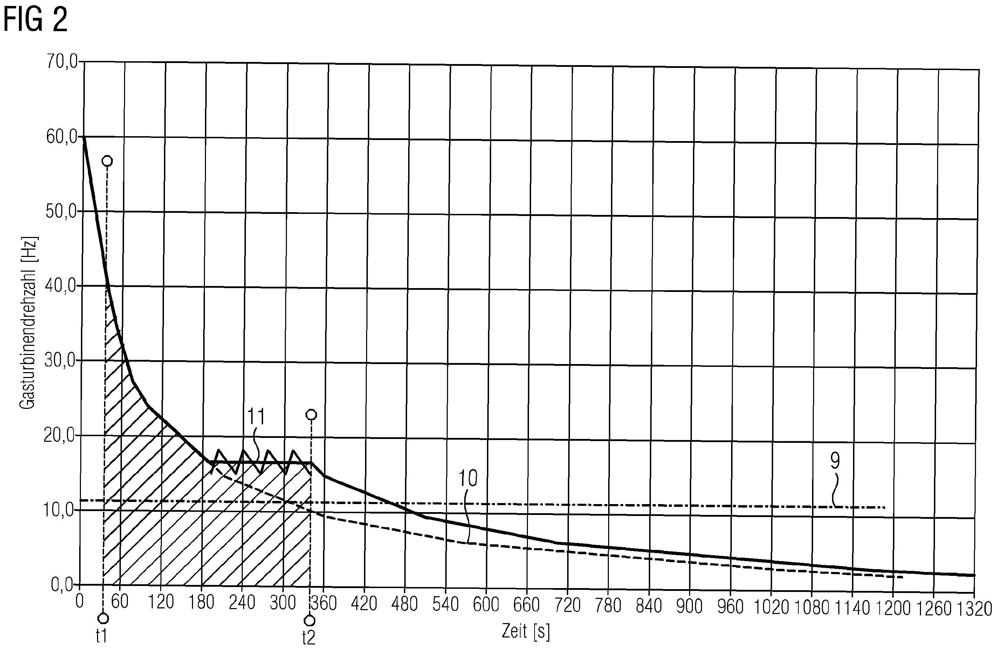

Figur 2 zeigt schematisch und beispielhaft die Gasturbinendrehzahl über der Zeit beim Abfahren einer Gasturbine 1 nach dem erfinderischen Verfahren.

Nach Abschaltung der Verbrennung verringert sich die Drehzahl der Gasturbine 1, wobei die Änderungsgeschwindigkeit der Drehzahl mit der Zeit ebenfalls abnimmt. Ohne einen weiteren Eingriff von außen wird eine für Spülvorgänge relevante Drehzahl-Untergrenze 9, die in der Figur 2 bei 8% der Nenndrehzahl eingezeichnet ist, bei etwa 300s unterschritten und fällt weiter ab (Kurve mit Bezugszeichen 10).

Ein weiteres Kriterium für eine ausreichende Spülung ist deren Dauer bei einer Drehzahl oberhalb der Drehzahl-Untergrenze 9. Diese Dauer liegt bei 5 Minuten. Da aber der Beginn einer Spülung nicht unmittelbar bei t=0s zu sehen ist, sondern ein paar Sekunden später (die Figur zeigt eine eher konservative Annahme), weil ein Gasschloss in der Brennstoffzufuhr erst geschlossen sein muss, sind die Bedingungen (Intensität und Dauer) für eine erfolgreiche Spülung zum Zeitpunkt t=300s nicht erfüllt.

Hier setzt die Erfindung an und fängt die Gasturbine 1 mithilfe des Anfahrumrichters 7 ab und hält die Drehzahl oberhalb der für den Spülvorgang relevanten Drehzahl-Untergrenze 9. Die Figur 2 zeigt hierzu eine Kurve 11 für einen idealen Spülvorgang mit Anfahrumrichter 7.

Die Drehzahl der Gasturbine 1 wird dabei solange oberhalb der Drehzahl-Untergrenze 9 gehalten, bis eine Mindestdauer für die Spülung erreicht ist. In der Figur 2 ist diese Mindestdauer durch die Zeitpunkte t1 und t2 definiert. Die Fläche unter der Kurve 11 und zwischen t1 und t2 stellt das Spülvolumen dar.

Die Figur 2 zeigt ferner, dass die Drehzahl der Gasturbine 1 (durch den Anfahrumrichter 7) moduliert wird. Dies geschieht, um zu vermeiden, dass sich Eigenfrequenzen aufschaukeln und die Anlage schädigen.

## Patentansprüche

1. Verfahren zum Spülen eines Abhitzedampferzeugers einer Kraftwerksanlage mit einer Gasturbine (1), umfassend einen Verdichter (2), eine Brennkammer (3) sowie eine Turbine (4) mit Rotor (12), und mit einem an die Gasturbine (1) gekoppelten Generator (6) und einem Anfahrumrichter (7) zum Umwandeln von einem Wechselstrom beliebiger Frequenz in einen Wechselstrom vorgegebener Frequenz, wobei der Anfahrumrichter (7) mit einem Ausgang des Generators (6) verbunden ist, an dem der Wechselstrom beliebiger Frequenz anliegt, **dadurch gekennzeichnet, dass** beim Abfahren der Gasturbine (1) der Rotor (12) mit Hilfe des Anfahrumrichters (7) bei einer Kesselspüldrehzahl abgefangen wird und der Abhitzedampferzeuger so lange weitergespült wird, bis Vorgaben zum Spülen des Abhitzedampferzeugers erfüllt sind.

2. Verfahren nach Anspruch 1, wobei ab Erreichen einer Kesselspüldrehzahl der Gasturbine (1) eine Gasturbinendrehzahl wiederholt auf- und abgefahren wird.

3. Verfahren nach Anspruch 2, wobei die Gasturbinendrehzahl mindestens solange wiederholt auf- und abgefahren wird, bis eine Mindestdauer für einen Spülvorgang erreicht ist.

4. Verfahren nach Anspruch 3, wobei die Mindestdauer 5 Minuten beträgt.

5. Verfahren nach einem der vorhergehenden Ansprüche, wobei die Kesselspüldrehzahl 8% einer Nenndrehzahl der Gasturbine beträgt.

## Claims

1. Method for flushing a heat recovery steam generator of a power plant with a gas turbine (1), comprising a compressor (2), a combustion chamber (3) and a turbine (4) with a rotor (12), and with a generator (6) coupled to the gas turbine (1) and a start-up converter (7) for converting from an alternating current of any frequency into an alternating current of a specified frequency, wherein the start-up converter (7) is connected to an output of the generator (6) at which the alternating current of any frequency is applied, **characterized in that**, when the gas turbine (1) is run down, the rotor (12) is supported with the aid of the start-up converter (7) at a boiler flushing speed and the heat recovery steam generator is flushed further until the specifications for flushing the heat recovery steam generator are satisfied.

2. Method according to Claim 1, wherein, after reaching a boiler flushing speed of the gas turbine (1), a gas turbine speed is repeatedly raised and lowered.

3. Method according to Claim 2, wherein the gas turbine speed is repeatedly raised and lowered at least until a minimum duration for a flushing process has been reached.

4. Method according to Claim 3, wherein the minimum duration is 5 minutes.

5. Method according to one of the preceding claims, wherein the boiler flushing speed is 8% of a nominal speed of the gas turbine.

## Revendications

1. Procédé de nettoyage d'un générateur de vapeur à récupération de la chaleur perdue d'une centrale électrique ayant une turbine (1) à gaz, comprenant un compresseur (2), une chambre de combustion (3) ainsi qu'une turbine (4) ayant un rotor (12), et comprenant un alternateur (6) accouplé à la turbine (1) à gaz et un onduleur (7) de démarrage pour la transformation d'un courant alternatif de n'importe quelle fréquence en un courant alternatif d'une fréquence donnée à l'avance, dans lequel l'onduleur (7) de démarrage est connecté à une sortie de l'alternateur (6), à laquelle s'applique le courant alternatif de n'importe quelle fréquence, **caractérisé en ce que**, à l'arrêt de la turbine (1) à gaz, on arrête à une vitesse de rotation de nettoyage de chaudière le rotor (12) à l'aide de l'onduleur (7) de démarrage et on continue à laver le générateur de vapeur à récupération de la chaleur perdue, jusqu'à ce que des prescriptions de lavage du générateur de vapeur à récupération de la chaleur perdue soient satisfaites.

2. Procédé suivant la revendication 1, dans lequel lorsqu'une vitesse de rotation de lavage de la chaudière de la turbine (1) à gaz est atteinte, on élève et on diminue de manière répétée une vitesse de rotation de la turbine à gaz.

3. Procédé suivant la revendication 2, **caractérisé en ce que** l'on élève et diminue de manière répétée, la vitesse de rotation de la turbine à gaz jusqu'à atteindre une durée minimum pour une opération de lavage.

4. Procédé suivant la revendication 3, dans lequel la durée minimum est de 5 minutes.

5. Procédé suivant l'une des revendications précédentes, dans lequel la vitesse de rotation de lavage de la chaudière représente 8% d'une vitesse de rotation nominale de la turbine à gaz.
